# EUROPÄISCHE PATENTANMELDUNG

(11) **EP 0 702 941 A1**
(43) Veröffentlichungstag der Anmeldung: **27.03.1996**
(21) Anmeldenummer: 95113530.0
(22) Anmeldetag: 29.08.1995
(51) Int. Cl.: A61C 8/00

(54) **Enossales Implanat für Zahnersatz**

(30) Priorität: 21.09.1994 DE 4433671
(71) Anmelder: IMZ-Fertigungs- und Vertriebsgesellschaft für dentale Technologie mbH, D-70794 Filderstadt (DE); EBERLE MEDIZINTECHNISCHE ELEMENTE GMBH, D-75449 Wurmberg (DE)
(72) Erfinder: Kirsch, Axel, Dr., D-70184 Stuttgart (DE); Dürr, Walter, D-75196 Remchingen (DE)
(74) Vertreter: Goddar, Heinz J., Dr.

(57) **Zusammenfassung**

Enossales Implantat für einen festsitzenden Zahnersatz, mit einem implantierbaren zylindrischen Grundkörper (57) aus Metall, einer in eine zum Zahnersatz hin offene, mit Innengewinde versehene Blindbohrung (56) desselben einschraubbaren Distanzhülse (12) aus Metall, die an ihrem dem Zahnersatz abgewandten Ende geschlossen ist, mit einer Ringschulter (20) am dem Zahnersatz zugewandten Stirnrand des Grundkörpers anliegt und von der Ringschulter aus in Richtung auf den Zahnersatz in einem zylindrischen Verlängerungsbereich (22) denselben Außendurchmesser hat wie der Grundkörper (57), einem Befestigungskopf (42) für den Zahnersatz, der mit der Distanzhülse (12) über ein elastisches Material, wie Kunststoff oder dergleichen, aufweisendes Zwischenelement (24) verbindbar ist, und einem als Befestigungsschraube (58) ausgebildeten Implantatpfosten aus Metall, der in eine mit Innengewinde versehene, zum Zahnersatz offene Sackbohrung (46) der Distanzhülse unter Andrücken einer dem Zwischenelement zugewandten Anlagefläche des Zahnersatzes an eine der Distanzhülse (12) abgewandte Anlageschulter des Zwischenelementes einschraubbar ist. Das Zwischenelement (24) weist eine die Sackbohrung der Distanzhülse im wesentlichen konzentrisch umgebende Metall-Kunststoff-Anordnung auf, deren im wesentlichen sowohl in Richtung der Längsmittelachse (52) der Distanzhülse kompressibles als auch senkrecht zur Längsmittelachse bei Biegebeanspruchung auslenkbares Zwischenelementgerüst mit dem Verlängerungsbereich und dem Befestigungskopf einstückig aus Metall ausgebildet ist, wobei in dem Zwischenelementgerüst (24) vorgesehene Hohlräume (36,38,40) mit dem elastischen Material, insbesondere Kunststoff oder dergleichen, ausgefüllt sind; und daß die Sackbohrung (46) der Distanzhülse nur im Bereich des Befestigungskopfes (42) mit dem Innengewinde (48) versehen ist.

## Beschreibung

Die Erfindung betrifft ein enossales Implantat für einen festsitzenden Zahnersatz, mit einem implantierbaren zylindrischen Grundkörper aus Metall, einer in eine zum Zahnersatz hin offene, mit Innengewinde versehene Blindbohrung desselben einschraubbaren Distanzhülse aus Metall, die an ihrem dem Zahnersatz abgewandten Ende geschlossen ist, mit einer Ringschulter am dem Zahnersatz zugewandten Stirnrand des Grundkörpers anliegt und von der Ringschulter aus in Richtung auf den Zahnersatz in einem zylindrischen Verlängerungsbereich denselben Außendurchmesser hat wie der Grundkörper, einem Befestigungskopf für den Zahnersatz, der mit der Distanzhülse über ein elastisches Material, wie Kunststoff oder dergleichen, aufweisendes Zwischenelement verbindbar ist, und einem als Befestigungsschrauber ausgebildeten Implantatpfosten aus Metall, der in eine mit Innengewinde versehene, zum Zahnersatz offene Sackbohrung der Distanzhülse unter Andrücken einer dem Zwischenelement zugewandten Anlagefläche des Zahnersatzes an eine der Distanzhülse abgewandte Anlageschulter des Zwischenelementes einschraubbar ist.

Aus der DE-PS 39 09 580 ist ein enossales Implantat für einen festsitzenden Zahnersatz der vorstehend beschriebenen Art bekannt, bei dem der Implantatpfosten bereichsweise konzentrisch von dem aus elastischem Kunststoffmaterial bestehenden Zwischenelement umgeben ist. Das elastische Zwischenelement weist dabei eine Innenbohrung auf, deren Durchmesser in einem dem Zahnersatz zugewandten Bereich größer ist als der Außendurchmesser des Implantatpfostens. Dadurch, daß der Implantatpfosten bei dem gattungsgemäßen enossalen Implantat, wie es auch in der DE-PS 38 39 724 beschrieben ist, die Innenbohrung des elastischen Zwischenelementes ohne Anliegen an der Innenwandung der Innenbohrung des Zwischenelementes in einem dem Zahnersatz benachbarten Bereich frei durchsetzt, entsteht eine Schwingstabwirkung, die zusammen mit einer vertikal federnden Abstützung des Zahnersatzes gegenüber dem Implantatpfosten eine begrenzte elastische Beweglichkeit des Zahnersatzes gegenüpber dem Grundkörper gewährleistet. Das konzentrisch zum Implantatpfosten angeordnete elastische Zwischenelement bewirkt dabei eine gedämpft elastische Lagerung, wobei die Dämpfung in axialer Richtung über die Volumenelastizität des Zwischenelementes erfolgt, während die Dämpfungwirkung in seitlicher Richtung durch den nach dem Schwingstabprinzip arbeitenden Implantatpfosten in Verbindung mit dem Material des Zwischenelementes erreicht wird. Hierdurch können die beim Verschwenken des am Implantatpfosten sitzenden Zahnersatzes entstehenden Druck- und Zugkräfte, auch Biegemomente, die auf das Zwischenelement einwirken, ohne Gefahr von Ermüdungsbrüchen etc. in den Grundkörper und damit in den Kieferknochen eingeleitet werden.

Das gattungsgemäße Implantat hat sich durchaus bewährt, wobei es sich aber als wünschenswert herausgestellt hat, insbesondere die axial-elastische Lagerung des Zahnersatzes noch weiter zu verbessern.

Der Erfindung liegt die Aufgabe zugrunde, das enossale Implantat der eingangs beschriebenen Art dahingehend weiterzubilden, daß bei verringertem Herstellungsaufwand eine zuverlässige elastisch-gedämpfte Lagerung des Zahnersatzes sowohl in axialer als auch in Quer- bzw. Scherbeanspruchungsrichtung gewährleistet ist.

Erfindungsgemäß wird diese Aufgabe dadurch gelöst, daß das Zwischenelement eine die Sackbohrung der Distanzhülse im wesentlichen konzentrisch umgebende Metall-Kunststoff-Anordnung aufweist, deren im wesentlichen sowohl in Richtung der Längsmittelachse der Distanzhülse kompressibles als auch senkrecht zur Längsmittelachse bei Biegebeanspruchung auslenkbares Zwischenelementgerüst mit dem Verlängerungsbereich und dem Befestigungskopf einstückig aus Metall ausgebildet ist, wobei in dem Zwischenelementgerüst vorgesehene Hohlräume mit dem elastischen Material, insbesondere Kunststoff oder dergleichen, ausgefüllt sind; und daß die Sackbohrung der Distanzhülse nur im Bereich des Befestigungskopfes mit dem Innengewinde versehen ist.

Dabei kann vorgesehen sein, daß das Zwischenelementgerüst mindestens einen im wesentlichen kreisscheibenförmigen Hohlraum aufweist, der mit dem elastischen Kunststoff oder dergleichen ausgefüllt ist, wobei die in Axialrichtung benachbarten kreisringscheibenförmigen Sektoren des Zwischenelementgerüstes über (jeweils) mindestens einen umfangsnahen Axial-Randsteg miteinander verbunden sind.

Die Erfindung schlägt auch vor, daß die den Hohlräumen zugeordneten Axial-Randstege in Umfangsrichtung gegeneinander versetzt angeordnet sind.

Weiterhin wird erfindungsgemäß vorgeschlagen, daß die in Axialrichtung benachbarten kreisringscheibenförmigen Sektoren des Zwischenelementgerüstes (jeweils) über zwei umfangsnahe Axial-Randstege, welche umfangsmäßig einander diametral gegenüberstehend angeordnet sind, miteinander verbunden sind.

Es ist auch vorgesehen, daß die jeweils einem der Hohlräume zugeordneten Paare von Axial-Randstegen in in Axialrichtung aufeinanderfolgenden Hohlräumen jeweils winkelmäßig gegeneinander versetzt angeordnet sind.

Die Erfindung sieht auch vor, daß die jeweils einem der Hohlräume zugeordneten Paare von Axial-Randstegen in in Axialrichtung aufeinanderfolgenden Hohlräumen jeweils um 180° versetzt gegeneinander angeordnet sind.

Die Erfindung schlägt auch vor, daß die Kunststoffkomponente des Zwischenelementes in sich zusammenhängend ausgebildet ist.

Weiterhin ist erfindungsgemäß vorgeschlagen, daß das Zwischenelementgerüst einen kleineren Außendurchmesser als der Grundkörper aufweist; und daß das Zwischenelementgerüst von einem einen Bestandteil der Kunststoffkomponente des Zwischenelementes bildenden Kunststoffmantel umgeben ist, dessen Außendurchmesser mit demjenigen des Grundkörpers und der Anlageschulter des Zwischenelementes übereinstimmt.

Auch ist vorgesehen, daß die Umfangswandung der Sackbohrung der Distanzhülse in ihrem nicht mit Innengewinde versehenen, dem Grundkörper zugewandten Aufnahmebereich mit einem einen Bestandteil der Kunststoffkomponente des Zwischenelementes bildenden Kunststoffmantel ausgekleidet ist, dessen Innendurchmesser dem Außendurchmesser des Implantatpfostens in einem nicht mit Außengewinde versehenen, dem Zahnersatz abgewandten Zapfenbereich des Implantatpfostens entspricht.

Weiterhin ist vorgesehen, daß der Kunststoffmantel auch den Boden des Aufnahmebereichs der Sackbohrung vollständig auskleidet.

Ferner sieht die Erfindung vor, daß die Kunststoffkomponente des Zwischenelementes in dem Verlängerungsbereich und/oder dem Befestigungskopf bezüglich ihrer Axialrichtung formschlüssig verankert ist.

Außerdem ist vorgeschlagen, daß der Kunststoffmantel in dem Verlängerungsbereich und/oder dem Befestigungskopf formschlüssig verankert ist.

Schließlich sieht die Erfindung vor, daß der Kunststoffmantel (jeweils) einen in eine umlaufende Umfangsringnut des Verlängerungsbereiches bzw. des Befestigungskopfes eingreifende Ringlippe aufweist.

Als Kunststoffmaterial für die vorzugsweise im Spritzgießverfahren einstückig-zusammenhängend hergestellte Kunststoffkomponente des elastischen Zwischenelementes bei der Erfindung kann beispielsweise, wie beim gattungsgemäßen Implantat, Polyoxymethylen verwendet werden.

Der Erfindung liegt die überraschende Erkenntnis zugrunde, daß es gelingt, eine deutlich verbesserte elastisch-gedämpfte Abstützung des Zahnersatzes sowohl im Hinblick auf Druckals auch auf Scherbeanspruchungen dadurch zu erzielen, daß der Zahnersatz mittels des Implantatpfostens lediglich mit dem Befestigungskopf starr verschraubt wird und der Befestigungskopf selbst mit dem starr in den Grundkörper eingeschraubten Teil der Distanzhülse über eine schwingmetallähnliche Metall-Kunststoff-Konstuktion in Verbindung steht, wobei alle Metallkomponenten der Distanzhülse einstückig aus Titan bzw. einer Titanlegierung hergestellt sind.

Wenn, wie bei einer besonderen Ausführungsform der Erfindung vorgesehen, die Kunststoffkomponente des Zwischenelementes in dem Verlängerungsbereich des Grundkörpers und/oder im Befestigungskopf, vorzugsweise in beiden vorgenannten Bauteilen, derart formschlüssig verankert ist, daß in Axialrichtung wirkende Kräfte aufgenommen werden können, ergibt sich eine besonders erwünschte Festigkeit des Zwischenelementes hinsichtlich Axialbeanspruchungen, die in einer Reihe von Anwendungsfällen, auch wegen der erzielten Versteifungswirkung, günstig sein kann.

Weitere Merkmale und Vorteile der Erfindung ergeben sich aus den Ansprüchen und aus der nachfolgenden Beschreibung, in der Ausführungsbeispiele anhand der schematischen Zeichnungen im einzelnen erläutert sind.

Dabei zeigt:
- Fig. 1: ein Ausführungsbeispiel einer Distanzhülse eines Implantats nach der Erfindung mit Zwischenelement und Befestigungskopf im Längsschnitt durch die Längsmittelachse des Implantatpfostens, wobei Ebenen II B und II C gegenüber einer Ebene II A um 240° bzw. 120° verdreht dargestellt sind, ohne Kunststoffkomponente;
- Fig. 2: senkrecht zur Längsmittelachse des Implantatpfostens beim Ausführungsbeispiel von Fig. 1 verlaufende Schnitte in den Ebenen II A, II B und II C, wobei Fig. 2 a) der Ebene II A, Fig. 2 b) der Ebene II B und Fig. 2 c) der Ebene II C von Fig. 1 entspricht und die Ebenen II A, II B und II C hier nicht gegeneinander verdreht dargestellt sind;
- Fig. 3: das Ausführungsbeispiel von Fig. 1 in vergrößerter Darstellung, wobei hier die Kunststoffkomponente vorhanden und die Distanzhülse in einen Grundkörper eingeschraubt ist, in Fig. 1 entsprechender axialer Längsschnittdarstellung;
- Fig. 4: in Fig. 3 entsprechender Darstellung ein weiteres Ausführungsbeispiel des enossalen Implantates nach der Erfindung;
- Fig. 5: in Fig. 4 entsprechender Darstellung ein weiteres Ausführungsbeispiel des enossalen Implantates nach der Erfindung;
- Fig. 6: in Fig. 1 entsprechender Darstellung das Ausführungsbeispiel von Fig. 5;
- Fig. 7: einen Schnitt entlang der Linie VII - VII von Fig. 6 in Richtung der Pfeile gesehen; und
- Fig. 8: die wechselseitige Anordnung der Randstege und der Kunststoffmaterialbereiche im Zwischenelement des Implantates gemäß den Fig. 5 bis 7 in der Abwicklung.

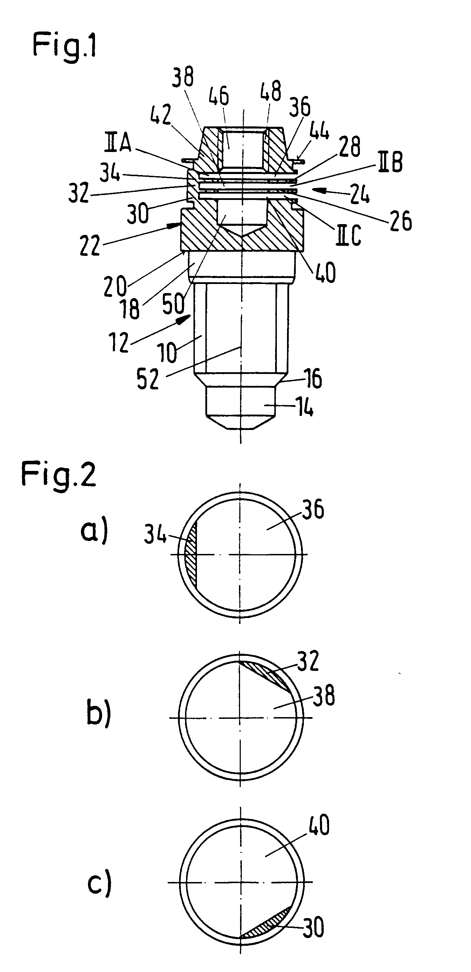

Wie Fig. 1 zeigt, weist das Implantat bei dem in den Fig. 1 bis 3 wiedergegebenen Ausführungsbeispiel eine in einem Gewindebereich 10 mit einem Außengewinde versehene zylindrische Distanzhülse 12 aus Titan auf, die an ihrem in Fig. 1 unten gelegenen Ende einen nicht mit Außengewinde versehenen Zapfenbereich 14 aufweist, welcher über eine konische Anschrägung 16 in den Gewindebereich 10 übergeht.

An den Gewindebereich 10 der Distanzhülse 12 schließt in Fig. 1 oben ein nicht mit Gewinde versehener zylindrischer Paßbereich 18 mit gegenüber dem Gewindebereich 10 vergrößertem Außendurchmesser an, der über eine Ringschulter 20 in einen Verlängerungsbereich 22 vergrößerten Durchmessers mit glatter, zylindrischer Umfangsfläche übergeht. An den Verlängerungsbereich 22 schließt in Fig. 1 weiter oben ein Zwischenelementgerüst 24 an, welches zwei kreisringscheibenförmige Sektoren 26, 28 aufweist, die durch axiale Randstege 30, 32, 34 miteinander verbunden sind.

Durch die Sektoren 26, 28 sind in den Ebenen II A, II B und II C kreisscheibenförmige Hohlräume 36, 38, 40 definiert. Die Darstellung in Fig. 1 ist dabei so gewählt, daß der Randsteg 34, der sich in der Ebene II A befindet, zeichnerisch seine korrekte Lage hat, entsprechend Fig. 2 a), während die Ebenen II B und II C gegenüber der Ebene II A in Fig. 1 um 240° bzw. 120° verdreht dargestellt sind. In Fig. 2 ist die tatsächliche Relativlage der Ebenen II A, II B und II C wiedergegeben, wobei Fig. 2 a) Ebene II A, Fig. 2 b) Ebene II B und Fig. 2 c) Ebene II C entspricht.

An das Zwischenelementgerüst 24 schließt in Fig. 1 oben ein mit konischer Paßfläche versehener Befestigungskopf 42 für einen in Fig. 1 nicht dargestellten festsitzenden Zahnersatz an, wobei die konische Umfangsfläche des Befestigungskopfes 42 in Richtung auf den Zapfenbereich 14 der Distanzhülse 12 mit einer Anlageschulter 44 zum Andrücken einer umlaufenden Anlagefläche des nicht gezeigten Zahnersatzes versehen ist.

Im Bereich des Befestigungskopfes 42, des Zwischenelementgerüstes 24 und des Verlängerungsbereiches 22 ist die Distanzhülse 12 mit einer Sackbohrung 46 versehen, die im Bereich des Befestigungskopfes 42 ein Innengewinde 48 aufweist, während ein in Fig. 1 weiter unten liegender Aufnahmebereich 50 ebenso wie die Sektoren 26, 28 kein Gewinde aufweist.

Infolge der gegeneinander umfangsmäßig verdrehten Anordnungen der axialen Randstege 30, 32, 34 ist das Zwischenelementgerüst 24 durch entsprechendes leichtes reversibles Biegen der Randstege 30, 32, 34 sowohl in Richtung einer Längsmittelachse 52 der Distanzhülse 12 axial kompressibel als auch zur Längsmittelachse 52 begrenzt kippbar, wodurch der Befestigungskopf 42 gegenüber dem Verlängerungsbereich 22 der Distanzhülse 12 begrenzt beweglich ist.

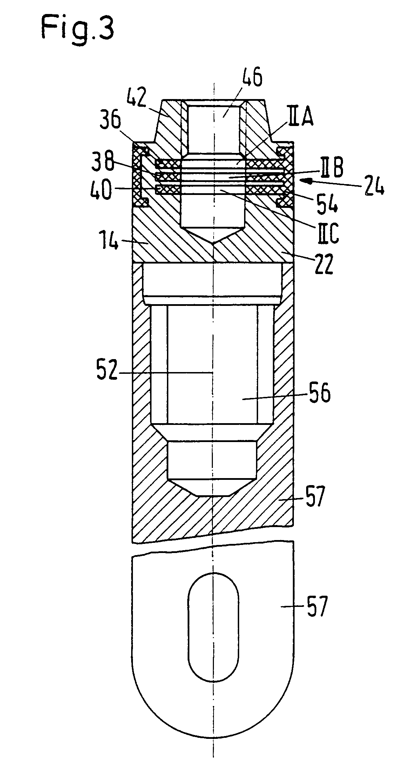

Wie Fig. 3 zeigt, sind dort die Hohlräume 36, 38, 40 vollständig mit Kunststoff ausgefüllt, und zwar bei dem gezeigten Ausführungsbeispiel mit Polyoxymethylen. Eine durch den die Hohlräume 36, 38, 40 ausfüllenden Kunststoff gebildete Kunststoffkomponente weist auch einen Kunststoffmantel 54 auf, der die Distanzhülse 12 im Bereich des Zwischenelementgerüstes 24 vollständig umgibt, so daß die Distanzhülse 12 in diesem Bereich denselben Außendurchmesser hat wie in dem Verlängerungsbereich 22.

Fig. 3 läßt weiterhin erkennen, daß die Distanzhülse 12 hier in eine Blindbohrung 56 eines implantierbaren Grundkörpers 57 eingeschraubt ist, der ebenfalls wie die Distanzhülse 12 aus Titan besteht.

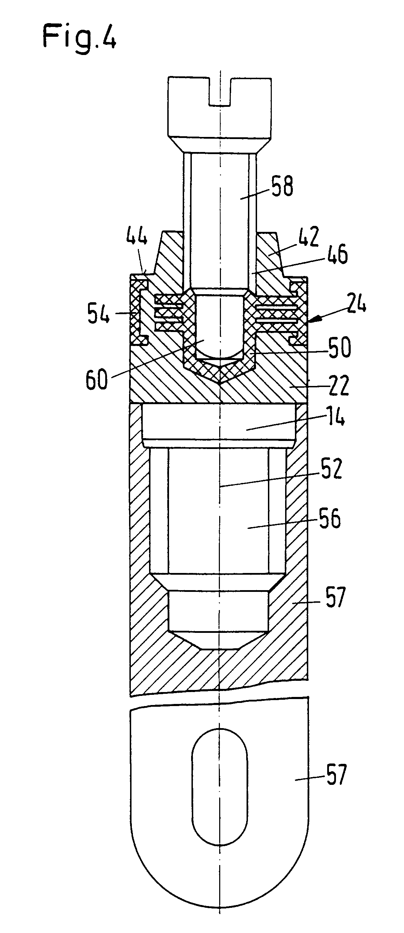

Bei dem in Fig. 4 gezeigten Ausführungsbeispiel ist in die Sackbohrung 46 der Distanzhülse 12 ein als Befestigungsschraube ausgebildeter Implantatpfosten 58 eingeschraubt, mittels dessen eine entsprechend ausgebildete ringförmige Anlagefläche des nicht gezeigten Zahnersatzes gegen die Anlageschulter 44 des Befestigungskopfes 42 gedrückt werden kann. Ein nicht mit Außengewinde versehener Zapfenbereich 60 des Implantatpfostens 58 taucht in den Aufnahmebereich 50 der Sackbohrung 46 der Distanzhülse 12 ein, wobei dieser Aufnahmebereich 50 bei dem Ausführungsbeispiel von Fig. 4 im Gegensatz zu demjenigen gemäß Fig. 1 bis 3 vollständig mit einem Kunststoffmantel ausgekleidet ist, der mit dem Kunststoffmantel 54 und der Kunststoffmasse, welche die Hohlräume 36, 38, 40 ausfüllt, eine zusammenhängende, einstückige Kunststoffkomponente bildet, die beispielsweise im Spritzgießverfahren hergestellt werden kann.

Fig. 3 und 4 lassen weiterhin erkennen, daß der Kunststoffmantel 54 der Kunststoffkomponente des Zwischenelementes sowohl in dem Verlängerungsbereich 22 des Grundkörpers als auch im Befestigungskopf 54 jeweils in der Weise formschlüssig verankert ist, daß eine Ringlippe der Kunststoffkomponente in jeweils eine umlaufende Ringnut des Verlängerungsbereiches 22 bzw. des Befestigungskopfes 54 eingreift. In Axialrichtung ist somit eine forschlüssige Verankerung der Kunststoffkomponente des Zwischenelementes sowohl in dem Verlängerungsbereich 22 des Grundkörpers als auch im Befestigungskopf 54 gewährleistet. Hierdurch können in Axialrichtung wirkende Kräfte formschlüssig aufgenommen werden.

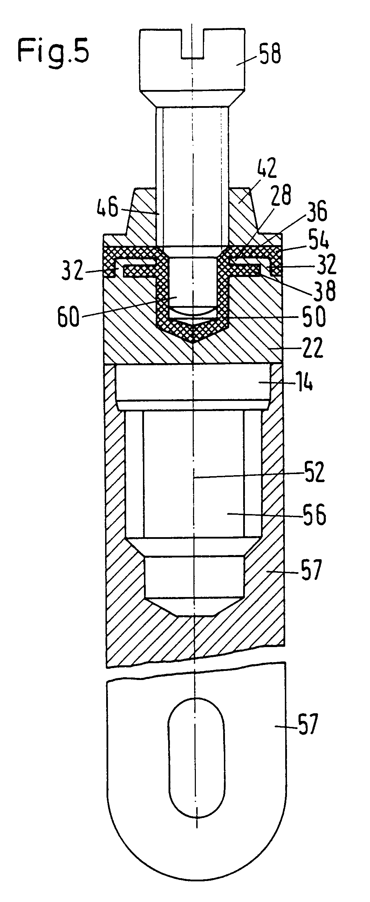

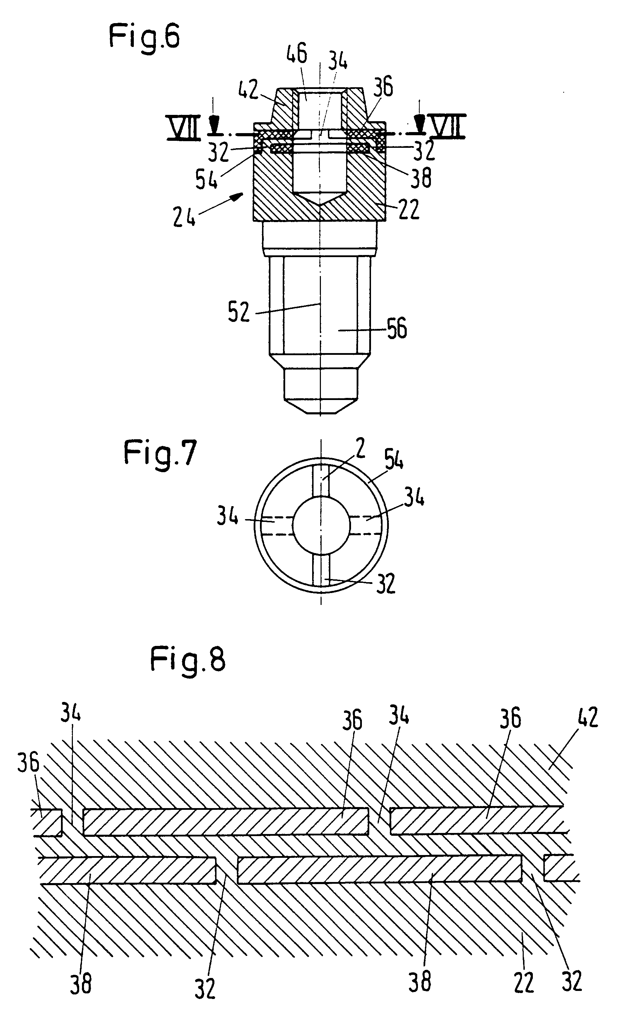

In den Fig. 5 bis 8 ist ein Ausführungsbeispiel der Erfindung gezeigt, bei dem jedem der Hohlräume 36, 38 jeweils zwei Randstege 34, 32 zugeordnet sind, wobei die beiden Randstege in jedem der Hohlräume einander diametral gegenüberliegen, während die Randstegpaare beider Hohlräume, wie dies inbesondere Fig. 7 erkennen läßt, in den übereinander angeordneten Hohlräumen um 90° gegeneinander verdreht sind. Durch diese räumliche Anordnung der Randstege 32, 34 bzw. der entsprechenden kunststoffgefüllten Hohlräume - die entsprechende Abwicklung ist in Fig. 8 gezeigt - läßt sich eine besonders günstige dämpfend-elastische Einstellung des Zwischenelementes erzielen. Die dämpfend-elastischen Eigenschaften lassen sich durch unterschiedliche Ausbildung der Breite der Randstege und/oder eine andere winkelmäßige Anordnung der Randstege sowohl in den einzelnen Hohlräumen als auch in den aufeinaderfolgenden Hohlräumen, in Relativanordnung, weiter zweckentsprechend modifizieren.

Dadurch, daß bei den gezeigten Ausführungsbeispielen gemäß der Erfindung der nicht gezeigte Zahnersatz mittels der Befestigungsschraube bzw. des Implantatpfostens 58 lediglich fest mit dem Befestigungskopf 42 verschraubt ist, der über die Kunststoffkomponente elastisch gegenüber dem Verlängerungsbereich 22 der Distanzhülse 12 begrenzt bewegbar ist, ist der Zahnersatz insgesamt gegenüber dem Grundkörper 57 sowohl im Sinn einer axialen Kompression als auch in Richtung von Scherbeanspruchungen des Zahnersatzes elastisch gelagert. Beim Ausführungsbeispiel von Fig. 4 trägt zu der elastischen Lagerung des Zahnersatzes zusätzlich der Kunststoffmantel 50 bei, der bezüglich der Längsmittelachse 52 seitliche Auslenkungen, des Zapfenbereiches 60 des Implantatpfostens 58 dämpft.

Die in der vorstehenden Beschreibung, in der Zeichung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### BEZUGSZEICHENLISTE

- 10: Gewindebereich
- 12: Distanzhülse
- 14: Zapfenbereich
- 16: Anschrägung
- 18: Paßbereich
- 20: Ringschulter
- 22: Verlängerungsbereich
- 24: Zwischenelementgerüst
- 26: Sektor
- 28: Sektor
- 30: Randsteg
- 32: Randsteg
- 34: Randsteg
- 36: Hohlraum
- 38: Hohlraum
- 40: Hohlraum
- 42: Befestigungskopf
- 44: Anlageschulter
- 46: Sackbohrung
- 48: Innengewinde
- 50: Aufnahmebereich
- 52: Längsmittelachse
- 54: Kunststoffmantel
- 56: Blindbohrung
- 57: Grundkörper
- 58: Implantatpfosten
- 60: Zapfenbereich

## Patentansprüche

1. Enossales Implantat für einen festsitzenden Zahnersatz, mit einem implantierbaren zylindrischen Grundkörper aus Metall, einer in eine zum Zahnersatz hin offene, mit Innengewinde versehene Blindbohrung desselben einschraubbaren Distanzhülse aus Metall, die an ihrem dem Zahnersatz abgewandten Ende geschlossen ist, mit einer Ringschulter am dem Zahnersatz zugewandten Stirnrand des Grundkörpers anliegt und von der Ringschulter aus in Richtung auf den Zahnersatz in einem zylindrischen Verlängerungsbereich denselben Außendurchmesser hat wie der Grundkörper, einem Befestigungskopf für den Zahnersatz, der mit der Distanzhülse über ein elastisches Material, wie Kunststoff oder dergleichen, aufweisendes Zwischenelement verbindbar ist, und einem als Befestigungsschrauber ausgebildeten Implantatpfosten aus Metall, der in eine mit Innengewinde versehene, zum Zahnersatz offene Sackbohrung der Distanzhülse unter Andrücken einer dem Zwischenelement zugewandten Anlagefläche des Zahnersatzes an eine der Distanzhülse abgewandte Anlageschulter des Zwischenelementes einschraubbar ist, dadurch gekennzeichnet, daß das Zwischenelement (24, 26, 28, 30, 32, 34, 36, 38, 40, 54) eine die Sackbohrung (46) der Distanzhülse (12) im wesentlichen konzentrisch umgebende Metall-Kunststoff-Anordnung aufweist, deren im wesentlichen sowohl in Richtung der Längsmittelachse (52) der Distanzhülse (12) kompressibles als auch senkrecht zur Längsmittelachse (52) bei Biegebeanspruchung auslenkbares Zwischenelementgerüst (24) mit dem Verlängerungsbereich (22) und dem Befestigungskopf (42) einstückig aus Metall ausgebildet ist, wobei in dem Zwischenelementgerüst (24) vorgesehene Hohlräume (36, 38, 40) mit dem elastischen Material, insbesondere Kunststoff oder dergleichen, ausgefüllt sind; und daß die Sackbohrung (46) der Distanzhülse (12) nur im Bereich des Befestigungskopfes (42) mit dem Innengewinde (48) versehen ist.

2. Implantat nach Anspruch 1, dadurch gekennzeichnet, daß das Zwischenelementgerüst (24) mindestens einen im wesentlichen kreisscheibenförmigen Hohlraum (36, 38, 40) aufweist, der mit dem elastischen Kunststoff oder dergleichen ausgefüllt ist, wobei die in Axialrichtung benachbarten kreisringscheibenförmigen Sektoren (26, 28) des Zwischenelementgerüstes (24) über (jeweils) mindestens einen umfangsnahen Axial-Randsteg (30, 32, 34) miteinander verbunden sind.

3. Implantat nach Anspruch 2 mit mindestens zwei in Axialrichtung beabstandeten, durch einen kreisringscheibenförmigen Sektor voneinander getrennten Hohlräumen (36, 38, 40), dadurch gekennzeichnet, daß die den Hohlräumen (36, 38, 40) zugeordneten Axial-Randstege (30, 32, 34) in Umfangsrichtung gegeneinander versetzt angeordnet sind.

4. Implantat nach Anspruch 2 oder 3, dadurch gekennzeichnet, daß die in Axialrichtung benachbarten kreisringscheibenförmigen Sektoren (26, 28) des Zwischenelementgerüstes (24) (jeweils) über zwei umfangsnahe Axial-Randstege (30, 32, 34), welche umfangsmäßig einander diametral gegenüberstehend angeordnet sind, miteinander verbunden sind.

5. Implantat nach den Ansprüchen 3 und 4, dadurch gekennzeichnet, daß die jeweils einem der Hohlräume (36, 38, 40) zugeordneten Paare von Axial-Randstegen (30, 32, 34) in in Axialrichtung aufeinanderfolgenden Hohlräumen (36, 38, 40) jeweils winkelmäßig gegeneinander versetzt angeordnet sind.

6. Implantat nach Anspruch 5, dadurch gekennzeichnet, daß die jeweils einem der Hohlräume (36, 38, 40) zugeordneten Paare von Axial-Randstegen (30, 32, 34) in in Axialrichtung aufeinanderfolgenden Hohlräumen (36, 38, 40) jeweils um 90° versetzt gegeneinander angeordnet sind.

7. Implantat nach einem der vorangehenden Ansprüche, dadurch gekennzeichnet, daß die Kunststoffkomponente des Zwischenelementes (24, 26, 28, 30, 32, 34, 36, 38, 40, 54) in sich zusammenhängend ausgebildet ist.

8. Implantat nach einem der vorangehenden Ansprüche, dadurch gekennzeichnet, daß das Zwischenelementgerüst (24) einen kleineren Außendurchmesser als der Grundkörper (57) aufweist; und daß das Zwischenelementgerüst (24) von einem einen Bestandteil der Kunststoffkomponente des Zwischenelementes (24, 26, 28, 30, 32, 34, 36, 38, 40, 54) bildenden Kunststoffmantel (54) umgeben ist, dessen Außendurchmesser mit demjenigen des Grundkörpers (57) und der Anlageschulter (44) des Zwischenelementes (24, 26, 28, 30, 32, 34, 36, 38, 40, 54) übereinstimmt.

9. Implantat nach einem der vorangehenden Ansprüche, dadurch gekennzeichnet, daß die Umfangswandung der Sackbohrung (46) der Distanzhülse (12) in ihrem nicht mit Innengewinde versehenen, dem Grundkörper (57) zugewandten Aufnahmebereich (50) mit einem einen Bestandteil der Kunststoffkomponente des Zwischenelementes (24, 26, 28, 30, 32, 34, 36, 38, 40, 54) bildenden Kunststoffmantel ausgekleidet ist, dessen Innendurchmesser dem Außendurchmesser des Implantatpfostens (58) in einem nicht mit Außengewinde versehenen, dem Zahnersatz abgewandten Zapfenbereich (60) des Implantatpfostens (58) entspricht.

10. Implantat nach Anspruch 9, dadurch gekennzeichnet, daß der Kunststoffmantel auch den Boden des Aufnahmebereichs (50) der Sackbohrung (46) vollständig auskleidet.

11. Implantat nach einem der vorangehenden Ansprüche, dadurch gekennzeichnet, daß die Kunststoffkomponente des Zwischenelementes (24, 26, 28, 30, 32, 34, 36, 38, 40, 54) in dem Verlängerungsbereich (22) und/oder dem Befestigungskopf (4) bezüglich ihrer Axialrichtung formschlüssig verankert ist.

12. Implantat nach den Ansprüchen 8 und 11, dadurch gekennzeichnet, daß der Kunststoffmantel (54) in dem Verlängerungsbereich (22) und/oder dem Befestigungskopf (42) formschlüssig verankert ist.

13. Implantat nach Anspruch 12, dadurch gekennzeichnet, daß der Kunststoffmantel (54) (jeweils) einen in eine umlaufende Umfangsringnut des Verlängerungsbreiches (22) bzw. des Befestigungkopfes (42) eingreifende Ringlippe aufweist.
